# EUROPEAN PATENT SPECIFICATION

(11) **EP 3 187 280 B1**
(45) Date of publication and mention of the grant of the patent: **19.10.2022**
(21) Application number: 16204260.0
(22) Date of filing: 15.12.2016
(51) Int. Cl.: C23C 24/08, B22F 1/052, B22F 1/065, B22F 1/10, B22F 9/08, C09D 7/40, C09D 7/61, C09D 7/65, F16C 33/20

(54) **METHOD FOR THE MANUFACTURE OF A FORMULATION AND FORMULATION**
VERFAHREN ZUR HERSTELLUNG EINER FORMULIERUNG UND FORMULIERUNG
PROCÉDÉ DE FABRICATION D'UNE FORMULATION ET FORMULATION

(30) Priority: 28.12.2015 IT UB20159317
(43) Date of publication of application: 05.07.2017
(73) Proprietor: GUARNIFLON S.P.A., 24060 Castelli Calepio, Bergamo (IT)
(72) Inventor: VILLANO, Massimo, I-24060 Castelli Calepio, Bergamo (IT); SIMONI, Giacomo, I-24060 Castelli Calepio, Bergamo (IT)
(74) Representative: Hoffmann Eitle

(56) References cited:
- EP-A1- 0 973 216
- EP-A1- 1 043 789
- EP-A2- 1 113 513
- EP-A2- 1 580 770
- WO-A2-2007/094764
- WO-A2-2009/091987
- US-A1- 2004 042 922
- US-A1- 2012 082 895

## Description

The present invention relates to a process for the manufacture of a formulation, a coating or a shaped material, and a formulation, a coating or a shaped material comprising a fluoropolymer.

Polytetrafluoroethylene (PTFE) is a tetrafluoroethylene polymer which has a number of desirable features both under the chemical and chemical-physical profile.

Merely by way of example, we may mention a high chemical inertia and resistance to heat, excellent dielectric features, excellent resistance to aging and a low coefficient of friction associated with self-lubricating properties.

However, there are some applications in which the features of PTFE need to be improved, in particular through the introduction of suitable fillers in the polymer, such as glass fibers, carbon, graphite, other polymers or mixtures thereof.

However, in special dynamic applications it has been found that the fillers currently used are not sufficiently well-performing, especially in cases where high resistance to compression and wear is required, along with an excellent surface finish.

WO 2009/091987 A2 and WO 2007/094764 A2 both describe such polymeric formulations and composites.

The present invention falls within the above context, aiming to provide a coating or shaped material made of a fluoropolymer capable of ensuring a higher resistance to compression and wear than current materials, and while at the same time ensuring a more than satisfactory surface finish.

Said object is achieved by a method for the manufacture of a coating or of a shaped material comprising the steps of:
i) providing a metal or a metal alloy in liquid form, said metal or metal alloy comprising or consisting of stainless steel;
ii) spraying the metal or metal alloy of step i) through a stream of gas under pressure to obtain substantially spherical or ellipsoidal solid metal particles;
iii) mixing the solid metal particles of step ii) and at least a fluoropolymer to obtain said formulation;
iv) optionally applying the formulation of step iii) to a surface to obtain said coating, or optionally shaping the formulation to obtain the shaped material.

According to an embodiment, the gas in step ii) comprises or consists of an inert gas, purely by way of example nitrogen.

Preferably, the gas in step ii) is used at a pressure equal to or higher than about 1.5 MPa (for example in the range 2-4 MPa).

As regards step iii), a variant contemplates that such a step comprises at least one dry mixing of the fluoropolymer and of the solid metal particles.

Preferably, in the formulation, in the coating or in the shaped material, the fluoropolymer acts as a matrix for the solid metal particles.

At least part of these particles is therefore preferably incorporated within the fluoropolymer.

According to the invention, the metal or metal alloy of step i) comprises or consists of stainless steel, for example AISI 316 L steel.

According to the invention, the fluoropolymer comprises or consists of polytetrafluoroethylene (PTFE), such as virgin PTFE.

According to the invention, the fluoropolymer is present in the formulation in granular form.

According to the invention, the fluoropolymer is in the form of homo-polymer of tetrafluoroethylene (TFE), or in the form of a copolymer comprising TFE monomer and one or more further fluorinated monomers, preferably in a quantity equal to or less than 2% by weight with respect to the total weight of TFE.

It is noted that, unless otherwise specified, the percentages given in this description are percentages by weight (%wt).

Advantageously, in the formulation of step iii), the fluoropolymer is present in a percentage by weight of at least 30%wt, preferably in a percentage equal to or greater than 40%wt, for example in the range 30-99%wt or 30-80%wt.

According to a preferred variant, the solid metal particles of the formulation have an average diameter in the range of 5-120 µm, preferably 5-50 µm, for example 10-25 µm.

It is noted that, in the formulation object of the present invention, further fillers may also be present in addition to the solid metal particles described above, of organic and/or inorganic type, mixed in such a formulation.

Merely by way of example we may mention silica (glass), carbon, reinforcing fibers or particles, carbon fibers or particles, MoS2, calcium ionosilicate optionally of mineral nature (Wollastonite), titanium dioxide, alumina, barium sulfate, graphite, colouring pigments, poly-imide, cyclic polyesters (for example EKONOL^{®}), polyether ether ketone (for example PEEK^{®}), polyparaphenylene sulfide (PPS), polypropylene sulfone (PPSO2) or mixtures thereof.

According to other embodiments, step iv) comprises:
a) at least one pre-forming step of the formulation of step iii), and at least one subsequent sintering step of the pre-formed mixture; or
b) at least one sintering step, or at least one sintering step and one moulding step of the formulation of step iii);
in order to obtain said material.

According to further embodiments, step iv) may comprise at least one turning step to obtain the shaped material.

Merely by way of example, an automatic cam type lathe or a lathe with CNC control may be used to carry out the turning step.

The present invention further relates to a formulation.

Since the invention provides that such a formulation is obtained through the method just described, such a formulation may include all the features that can be deduced - even implicitly - from the foregoing description.

Such a formulation comprises a mixture of spherical or ellipsoidal solid metal particles, consisting of a metal or a metal alloy comprising or consisting of stainless steel, and at least a fluoropolymer.

According to a variant, the metal or metal alloy comprises or consists of stainless steel, for example AISI 316 L steel.

According to the invention, the fluoropolymer comprises or consists of polytetrafluoroethylene (PTFE), in the form of homo-polymer or co-polymer as discussed above.

According to an embodiment, the fluoropolymer is present at least in a percentage by weight of 30%wt.

Preferably, such a percentage of fluoropolymer is equal to or greater than 40% wt, for example in the range 30-99% wt or 30-80% wt.

According to a further embodiment, the solid metal particles have an average diameter in the range of 5-120 µm, preferably 5-50 µm, for example 10-25 µm.

Advantageously, the present formulation is characterised by an average density in the range 2.18-4.74 g/cm3, for example between 2.8 - 3.1 g/cm3.

As regards the application field object of the present invention, the coating or shaped material may constitute at least part of a friction bearing, friction shoe or pad, of a segment for a dry or lubricated compressor, a spherical bushing, a pivot support, a guide, a joint, of a seat or sealing element of a valve, preferably for an industrial machine and/or a valve.

For example, such a machine may be numerical control or a high-precision machine tool.

Advantageously, the valve may be a ball or a gate valve.

The object of the present invention will now be described on the basis of some non-limiting examples thereof.

### Example 1: Preparation of the samples to be compared

Three separate samples of the formulation according to the invention are prepared by dry mixing 50% wt of virgin PTFE and 50% wt of the solid metal particles indicated hereinafter:
1) Steel 316L; Standard D90 = 45 µm; spraying in water; particles with irregular shape;
2) Steel 316L; Standard D90 = 45 µm; spraying in gas; particles of spherical shape;
3) Steel 316L; Standard D90 = 22 µm; spraying in gas; particles of spherical shape.

Samples 2) and 3) therefore fall within the scope of the present invention, while sample 1) with irregularly shaped particles is a comparison sample.

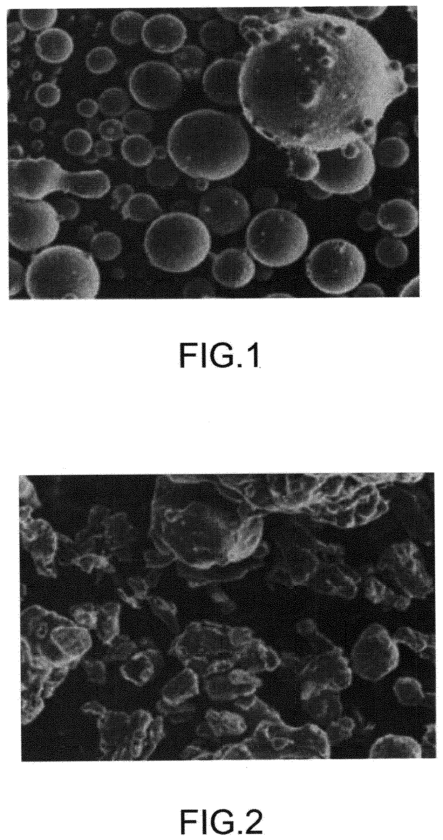

To this end, see the SEM micrographs (300x) of the solid metal particles 3) in figure 1, and of the solid metal particles 1) in figure 2 to see the non-conformity of the respective particles.

The semi-finished products indicated hereinafter are formed from the samples thus constituted. For convenience, the samples marked with references 1), 2), 3) hereinafter will correspond to particles 1)-3) contained therein.

It is noted that the semi-finished products of the examples constitute specific examples of shaped materials obtainable according to the present invention.

### Example 2: Analysis of the samples of example 1.

From the intermediate mixtures manufactured with particles 1), 2), 3), six semi-finished products were prepared in a round shape (diameter = 60 mm; height = 80 mm), two for each type, by means of a forming process comprising a pre-forming step and a sintering step.

Of these semi-finished products, one for each type of steel was "peeled" in film form (i.e. peeled to obtain a film) to a thickness of 0.6 mm for the mechanical characterization of the sample, the other was subjected to a roughness test.

The analyses performed on each type of sample are summarised in the following table:

| | |
|---|---|
| A. Visual analysis | F. Mechanical analyses |
| B. Gravimetric analysis (density) | G. Hardness analysis |
| C. Mechanical analyses | H. Wear tests |
| D. Roughness measurements | |
| E. Particle size analysis | |

### 2.A. Visual analysis.

| Sample | Visual analysis results |
|---|---|
| 1) | Standard colour |
| 2) | Colour identical to the standard; Oxidation slightly deeper than the standard; To the touch, the film is slightly smoother than the standard; |
| 3) | Darker colour than the standard; Darker oxidation: on the one end, it has the same depth, on the other it has a very different colour, almost brown; To the touch, the film is very smooth. |

### 2.B. Gravimetric analysis (density)

A hydrostatic balance is used for measuring the density of the semi-finished products obtained. The data reported in the following table are comparable in absolute terms.

| Sample | Density (g/cm3) ASTM D792 |
|---|---|
| 1) | 3,292 |
| 2) | 3,333 |
| 3) | 3,358 |

### 2.C. Mechanical analyses

The semi-finished products were prepared in the form of specimen in accordance with the ASTM D4745 standard. The measurements were made using a dynamometer INSTRON 3365.

| Sample | Tensile strength ASTM D4745 (N/mm2) | Elongation breaking ASTM D4745 (%) |
|---|---|---|
| 1) | 18,72 | 166,14 |
| 2) | 18,48 | 204,27 |
| 3) | 23,84 | 242,66 |

From the above table it can be seen that the mechanical features of sample 3) are markedly better than those of sample 1), while those of sample 2) are comparable to those of sample 1) with the exception of an improvement in elongation breaking.

### 2.D. Roughness measurement

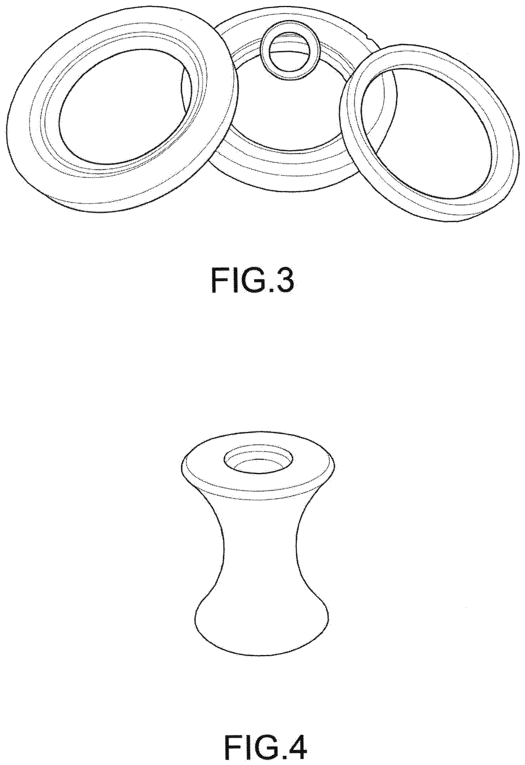

A semi-finished product was processed in the form shown in figure 3 through mechanical machining, to then be subjected to a first roughness tests, the result of which is shown in the following table as "value 1". Figure 4 shows other possible semi-finished products or shaped materials obtainable according to the invention, for example of annular shape. These semi-finished products may preferably be or comprise seals or gaskets.

For a more accurate measurement of roughness, such semi-finished product processed was then dissected to allow the execution of a more accurate measurement of roughness in the central area of the semi-finished product, indicated as "value 2" in the following table:

| Sample | Roughness - Value 1 (Ra) | Roughness - Value 2 (Ra) |
|---|---|---|
| 1) | 4,8 | -- |
| 2) | 3,6 | 3,378 |
| 3) | 1,6 | 1,798 |

The roughness table shows that the roughness of samples 2) and 3) is markedly lower than that of sample 1).

### 2.E.Particle size analysis

In the following table, column "d100" indicates the maximum particle size for the various samples.

| Sample | d50 | d90 | d100 |
|---|---|---|---|
| 1) | 34,65 µm | 58,81 µm | ≈ 95µm |
| 2) | 43,36 µm | 71,52 µm | ≈ 107pm |
| 3) | 10,25 µm | 26,96 µm | ≈ 55µm |

From the analyses above, it can be seen that sample 3) has a tighter particle size distribution and therefore more homogeneous with respect to samples 1) and 2).

The smaller particle size of sample 2) and its greater homogeneity involve a better volumetric distribution within the formulation, being arranged in a homogeneous manner within the PTFE matrix.

### 2.F. Porosity analysis

| Sample | Bulk Density (g/cm3) | Apparent Density (g/cm3) | Total pore volume (mm3/g) | Total pore surface area (m2/g) | Median pore radius (µm) | Accessible Porosity (%) | Inaccessible porosity (%) |
|---|---|---|---|---|---|---|---|
| 1) | 3,1354 | 3,3471 | 20,16 | 3,279 | 0,0182 | 6,62 | 2,87 |
| 2) | 3,2412 | 3,4429 | 18,08 | 2,944 | 0,0172 | 5,86 | 0,81 |
| 3) | 3,2582 | 3,4526 | 17,29 | 2,937 | 0,0164 | 5,63 | 0,01 |

A helium pycnometer and a mercury porosimeter were used this analysis, and the porosimetry of samples/semi-finished products 1), 2) and 3) was evaluated.

From the table above it is deduced that sample 1) has a porosity and a pore size greater than samples 2) and 3). Therefore, it can be assumed that samples 2) and 3) are likely to have a greater resistance to compression and better sealing properties to liquids and to gases compared to the control sample 1).

### 2.G. Shore D hardness and Rockwell hardness analysis

| Sample | Shore D hardness | Rockwell Hardness (MPa) |
|---|---|---|
| 1) | 63 | 39 |
| 3) | 63 | 38 |

The hardness values obtained on samples 1) and 3) are substantially matching.

### 2.H. Wear tests

| | Friction | | | | Temperature | | | | Wear | P^{∗}V | K |
|---|---|---|---|---|---|---|---|---|---|---|---|
| Sample | Finale | Max | | Min | Average (PMS) Finale | Max | Min Average (PMS) | | Last reading (mm) | (N/mm' ^{∗} m/h) | (mm∗/N^{∗}m) |
| 1) (Load 2 kg - Speed 4m/s) | 0,046 | 0,500 | 0,044 | 0,215 | 92,0 | 169,2 | 59,4 | 95,8 | 1,01651 | 2.793,6 | 2,93444 K-06 |
| 31 (Load 2 kg - Speed 4m/s) | 0,232 | 0.462 | 0,150 | 0,306 | 106,1 | 175 | 54,7 | 132 | 1,01625 | 2.793,6 | 2,71476 K-06 |
| 1) (Load 2 kg - Speed 2m/s) | 0,179 | 0,518 | 0,144 | 0,231 | 56,9 | 96,8 | 56,1 | 65,6 | 1,01625 | 1.164,2 | 5,29022 K-06 |
| 3) (Load 2 kg - Speed 2m/s) | 0,294 | 0,361 | 0,192 | 0,284 | 58,9 | 80,5 | 41,5 | 66,2 | 0,68584 | 1.164,2 | 3,52747 K-06 |

Wear tests were conducted using a tribometer on samples/semi-finished products 1) and 3) in accordance with the ASTM D3702 standard, according to a "pin on disc" procedure.

The wear tests carried would lead to deduce that, at low loads, the spherical sample 3) has a better wear behaviour than sample 1), more evident at lower speed values, this aspect probably due to the spherical nature of the fillers used.

Innovatively, the method object of the present invention allows obtaining higher performance fluoropolymers compared to known fluoropolymers by providing, among other things, surface finishes with a low roughness value, while preventing the need for surface post-treatments to improve such a feature.

Innovatively, the formulation, the coating or the shaped material object of the present invention has a combination of highly desirable features, in particular high compression strength, high resistance to chemical agents and the substantial absence of electrostatic charges.

Advantageously, the formulation, the method and the coating/material object of the present invention allow increasing the wear resistance and reducing the overall coefficient of thermal expansion, at least compared to a conventional fluoropolymer, without the fillers object of the invention.

Advantageously, the formulation object of the present invention allows obtaining a good workability in the steps downstream of its obtaining, by producing surface finishes with an extremely low roughness as a result of mechanical machining performed with traditional parameters.

Advantageously, the formulation, the method and the coating/material object of the present invention allow the production of products with a very low porosity, thereby improving the liquid and gas sealing properties thereof.

A man skilled in the art may make several changes or replacements of elements with other functionally equivalent ones to the embodiments of the formulation, of the method and of the coating/material in order to meet specific needs.

Also such variants are included within the scope of protection as defined by the following claims.

Moreover, each variant described as belonging to a possible embodiment may be implemented independently of the other variants described.

## Claims

1. Method for the manufacture of a formulation, of a coating or of a shaped material comprising the steps of:
i) providing a metal or a metal alloy in liquid form, said metal or metal alloy comprising or consisting of stainless steel;
ii) spraying the metal or metal alloy of step i) through a stream of gas under pressure to obtain spherical or ellipsoidal solid metal particles;
iii) mixing the solid metal particles from the previous step ii) and at least a fluoropolymer to obtain said formulation;
iv) optionally applying the formulation of step iii) to a surface to obtain said coating, or optionally shaping said formulation to obtain said shaped material;
said method being **characterized in that** said fluoropolymer is in the form of a homo-polymer of tetrafluoroethylene (TFE), or in the form of a co-polymer comprising TFE monomer and one or more further fluorinated monomers in a quantity equal to or less than 2% by weight with respect to the total weight of TFE, and **in that** said fluoropolymer is present in the formulation in granular form.

2. Method according to claim 1, wherein the gas of step ii) comprises or consists of an inert gas, used at a pressure equal to or greater than about 1,5 MPa.

3. Method according to claim 1 or 2, wherein the metal or metal alloy of step i) comprises or consists of AISI 316 L steel.

4. Method according to any of the preceding claims, wherein, in the formulation of step iii), the fluoropolymer is present at least in a percentage by weight of 30%wt, preferably in a percentage equal to or greater than 40%wt, for example in the range 30-99%wt.

5. Method according to any of the previous claims, wherein step iv) comprises:
a) at least one pre-forming step of the formulation of step iii), and at least one subsequent sintering step of the pre-formed formulation; or
b) at least one sintering step, or at least one sintering and one moulding step, of the formulation of step iii);
in order to obtain said material.

6. Method according to any of the preceding claims, wherein the solid metal particles obtained in step ii) have an average diameter in the range of 5-120 µm, preferably 5-50 µm.

7. Method according to the preceding claim, wherein the solid metal particles obtained in step ii) have an average diameter in the range of 10-25 µm.

8. Formulation comprising a mixture of spherical or ellipsoidal solid metal particles, consisting of a metal or a metal alloy comprising or consisting of stainless steel, and at least a fluoropolymer;
said formulation being **characterized in that** said fluoropolymer is in the form of a homo-polymer of tetrafluoroethylene (TFE), or in the form of a co-polymer comprising TFE monomer and one or more further fluorinated monomers in a quantity equal to or less than 2% by weight with respect to the total weight of TFE, and **in that** said fluoropolymer is present in the formulation in granular form.

9. Formulation according to the preceding claim, wherein the fluoropolymer is present at least in a percentage by weight of 30%wt, preferably in a percentage equal to or greater than 40%wt, for example in the range 30-99%wt.

10. Formulation according to any of the claims 8-9, wherein the solid metal particles have an average diameter in the range of 5-120 µm, preferably 5-50 µm.

11. Formulation according to the previous claim, wherein the solid metal particles have an average diameter in the range of 10-25 µm.

12. Formulation according to any of the claims 8-11, **characterised by** an average density in the range 2,18-4,74 g/cm3, for example between 2,8 - 3,1 g/cm3.

13. Formulation according to any of the claims 8-12, wherein the metal or metal alloy comprises or consists of AISI 316 L steel.

14. Formulation according to any of the claims 8-13:
- comprising further charges, additional to said solid metal particles, mixed in said formulation, said charges being of the organic and/or inorganic type and being selected from the group consisting of silica, charcoal, reinforcement particles or fibres, carbon particles or fibres, MoS2, calcium inosilicate optionally of a mineral nature, titanium dioxide, alumina, barium sulphate, graphite, colouring pigments, polyimide, cyclic polyesters, ether ketone polyether, polyparaphenylene sulfide, polypropylene sulfone or mixtures thereof; and/or
- wherein the fluoropolymer and the solid metal particles are dry mixed.

15. Coating or shaped material comprising a formulation according to any of the claims 8-14, **characterised in that** said coating or shaped material constitutes at least part of a friction bearing, friction shoe or pad, of a segment for a dry or lubricated compressor, a spherical bushing, a pivot support, a guide or a joint, of a seat or sealing element of a valve, for example for an industrial machine and/or a valve.

## Patentansprüche

1. Verfahren zur Herstellung einer Formulierung, einer Beschichtung oder eines geformten Materials, umfassend die Schritte:
i) Bereitstellen eines Metalls oder einer Metalllegierung in flüssiger Form, wobei das Metall oder die Metalllegierung Edelstahl umfasst oder daraus besteht;
ii) Sprühen des Metalls oder der Metalllegierung aus Schritt i) durch einen Gasstrom unter Druck, um sphärische oder ellipsoide feste Metallpartikel zu erhalten;
iii) Mischen der festen Metallpartikel aus dem vorhergehenden Schritt ii) und mindestens einem Fluorpolymer, um die Formulierung zu erhalten;
iv) optionales Auftragen der Formulierung aus Schritt
iii) auf eine Oberfläche, um die Beschichtung zu erhalten, oder optional das Formen der Formulierung, um das geformte Material zu erhalten;
wobei das Verfahren **dadurch gekennzeichnet ist, dass** das Fluorpolymer in Form eines Homopolymers von Tetrafluorethylen (TFE), oder in Form eines Copolymers umfassend ein TFE-Monomer und ein oder mehrere weitere fluorierte Monomere in einer Menge von gleich oder weniger als 2 Gew.-%, bezogen auf das Gesamtgewicht von TFE, ist, und wobei das Fluorpolymer in der Formulierung in granulierter Form vorliegt.

2. Verfahren gemäß Anspruch 1, wobei das Gas aus Schritt ii) ein inertes Gas umfasst oder aus einem solchen besteht, angewandt bei einem Druck gleich oder größer als etwa 1,5 MPa.

3. Verfahren gemäß Anspruch 1 oder 2, wobei das Metall oder die Metalllegierung aus Schritt i) AISI 316 L Stahl umfasst oder daraus besteht.

4. Verfahren gemäß mindestens einem der vorhergehenden Ansprüche, wobei in der Formulierung aus Schritt iii) das Fluorpolymer mindestens in einem Gewichtsprozentsatz von 30 Gew.-%, vorzugsweise in einem Prozentsatz gleich oder größer als 40 Gew.-%, zum Beispiel in einem Bereich von 30-99 Gew.-%, vorhanden ist.

5. Verfahren gemäß mindestens einem der vorhergehenden Ansprüche, wobei Schritt iv) folgendes umfasst:
a) mindestens einen Vorformungsschritt der Formulierung aus Schritt iii), und mindestens einen anschließenden Sinterschritt der vorgeformten Formulierung; oder
b) mindestens einen Sinterschritt, oder mindestens einen Sinter- und einen Formgebungsschritt der Formulierung aus Schritt iii);
um das Material zu erhalten.

6. Verfahren gemäß mindestens einem der vorhergehenden Ansprüche, wobei die in Schritt ii) erhaltenen festen Metallpartikel einen mittleren Durchmesser im Bereich von 5-120 µm, vorzugsweise 5-50 µm, aufweisen.

7. Verfahren gemäß mindestens einem der vorhergehenden Ansprüche, wobei die in Schritt ii) erhaltenen festen Metallpartikel einen mittleren Durchmesser im Bereich von 10-25 µm aufweisen.

8. Formulierung umfassend eine Mischung aus sphärischen oder ellipsoiden festen Metallpartikeln, bestehend aus einem Metall oder einer Metalllegierung umfassend oder bestehend aus Edelstahl, und mindestens einem Fluorpolymer;
wobei die Formulierung **dadurch gekennzeichnet ist, dass** das Fluorpolymer in Form eines Homopolymers von Tetrafluorethylen (TFE), oder in Form eines Copolymers umfassend ein TFE-Monomer und ein oder mehrere weitere fluorierte Monomere in einer Menge von gleich oder weniger als 2 Gew.-%, bezogen auf das Gesamtgewicht von TFE, ist, und wobei das Fluorpolymer in der Formulierung in granulierter Form vorliegt.

9. Formulierung gemäß mindestens einem der vorhergehenden Ansprüche, wobei das Fluorpolymer mindestens in einem Gewichtsprozentsatz von 30 Gew.-% vorhanden ist, vorzugsweise in einem Prozentsatz gleich oder größer als 40 Gew.-%, zum Beispiel in einem Bereich von 30-99 Gew.-%.

10. Formulierung gemäß mindestens einem der Ansprüche 8-9, wobei die festen Metallpartikel einen mittleren Durchmesser im Bereich von 5-120 µm, vorzugsweise 5-50 µm, aufweisen.

11. Formulierung gemäß mindestens einem der vorhergehenden Ansprüche, wobei die festen Metallpartikel einen mittleren Durchmesser im Bereich von 10-25 µm aufweisen.

12. Formulierung gemäß mindestens einem der Ansprüche 8-11, **gekennzeichnet durch** eine durchschnittliche Dichte im Bereich von 2,18-4,74 g/cm3, zum Beispiel zwischen 2,8-3,1 g/cm3.

13. Formulierung gemäß mindestens einem der Ansprüche 8-12, wobei das Metall oder die Metalllegierung AISI 316 L Stahl umfasst oder daraus besteht.

14. Formulierung gemäß mindestens einem der Ansprüche 8-13:
- umfassend weitere Komponenten, zusätzlich zu den festen Metallpartikeln, gemischt in die Formulierung, wobei die Komponenten vom organischen und/oder anorganischen Typ sind und ausgewählt aus der Gruppe, bestehend aus Siliziumoxid, Holzkohle, Verstärkungspartikeln oder -fasern, Kohlenstoffpartikeln oder -fasern, MoS2, Calciuminosilicat, optional mineralischer Natur, Titandioxid, Aluminiumoxid, Bariumsulfat, Graphit, Farbpigmente, Polyimid, cyclische Polyester, Etherketonpolyether, Polyparaphenylensulfid, Polypropylensulfon oder Mischungen davon, sind; und/oder
- wobei das Fluorpolymer und die festen Metallpartikel trocken gemischt sind.

15. Beschichtung oder geformtes Material umfassend eine Formulierung gemäß mindestens einem der Ansprüche 8-14, **dadurch gekennzeichnet, dass** die Beschichtung oder das geformte Material zumindest einen Teil eines Gleitlagers, Gleitschuhs oder Pads bildet, eines Segments für einen trockenen oder geschmierten Kompressor, einer Kugelbuchse, eines Schwenklagers, einer Führung oder eines Gelenks, eines Sitzes oder eines Dichtungselements eines Ventils, zum Beispiel für eine Industriemaschine und/oder ein Ventil.

## Revendications

1. Procédé pour la fabrication d'une formulation, d'un revêtement ou d'un matériau façonné, comprenant les étapes de :
i) obtention d'un métal ou d'un alliage métallique sous forme liquide, ledit métal ou alliage métallique comprenant ou consistant en un acier inoxydable ;
ii) pulvérisation du métal ou de l'alliage métallique de l'étape i) à travers un courant de gaz sous pression pour que soient obtenues des particules métalliques solides sphériques ou ellipsoïdales ;
iii) mélange des particules métalliques solides obtenues dans l'étape ii) précédente et d'au moins un polymère fluoré pour que soit obtenue ladite formulation ;
iv) éventuellement application de la formulation de l'étape iii) sur une surface pour que soit obtenu ledit revêtement, ou éventuellement façonnage de ladite formulation pour que soit obtenu ledit matériau façonné ;
ledit procédé étant **caractérisé en ce que** ledit polymère fluoré est sous la forme d'un homopolymère de tétrafluoroéthylène (TFE), ou sous la forme d'un copolymère comprenant un monomère de TFE et un ou plusieurs autres monomères fluorés en une quantité égale ou inférieure à 2 % en poids par rapport au poids total du TFE, et **en ce que** ledit polymère fluoré est présent dans la formulation sous forme granulaire.

2. Procédé selon la revendication 1, dans lequel le gaz de l'étape ii) comprend ou consiste en un gaz inerte, utilisé sous une pression égale ou supérieure à environ 1,5 MPa.

3. Procédé selon la revendication 1 ou 2, dans lequel le métal ou l'alliage métallique de l'étape i) comprend ou consiste en l'acier AISI 316 L.

4. Procédé selon l'une quelconque des revendications précédentes, dans lequel, dans la formulation de l'étape iii), le polymère fluoré est présent au moins à un pourcentage en poids de 30 % en poids, de préférence à un pourcentage égal ou supérieur à 40 % en poids, par exemple situé dans la plage allant de 30 à 99 % en poids.

5. Procédé selon l'une quelconque des revendications précédentes, dans lequel l'étape iv) comprend :
a) au moins une étape de préformation de la formulation de l'étape iii) et au moins une étape de frittage subséquente de la formulation préformée ; ou
b) au moins une étape de frittage, ou au moins une étape de frittage et une étape de moulage, de la formulation de l'étape iii) ;
afin que soit obtenu ledit matériau.

6. Procédé selon l'une quelconque des revendications précédentes, dans lequel les particules métalliques solides obtenues dans l'étape ii) ont un diamètre moyen situé dans la plage allant de 5 à 120 µm, de préférence de 5 à 50 µm.

7. Procédé selon la revendication précédente, dans lequel les particules métalliques solides obtenues dans l'étape ii) ont un diamètre moyen situé dans la plage allant de 10 à 25 µm.

8. Formulation comprenant un mélange de particules métalliques solides sphériques ou ellipsoïdales, consistant en un métal ou un alliage métallique comprenant ou consistant en un acier inoxydable, et au moins un polymère fluoré ;
ladite formulation étant **caractérisée en ce que** ledit polymère fluoré est sous la forme d'un homopolymère de tétrafluoroéthylène (TFE), ou sous la forme d'un copolymère comprenant un monomère de TFE et un ou plusieurs autres monomères fluorés en une quantité égale ou inférieure à 2 % en poids par rapport au poids total du TFE, et **en ce que** ledit polymère fluoré est présent dans la formulation sous forme granulaire.

9. Formulation selon la revendication précédente, dans laquelle le polymère fluoré est présent au moins à un pourcentage en poids de 30 % en poids, de préférence à un pourcentage égal ou supérieur à 40 % en poids, par exemple situé dans la plage allant de 30 à 99 % en poids.

10. Formulation selon l'une quelconque des revendications 8 et 9, dans laquelle les particules métalliques solides ont un diamètre moyen situé dans la plage allant de 5 à 120 µm, de préférence de 5 à 50 µm.

11. Formulation selon la revendication précédente, dans laquelle les particules métalliques solides ont un diamètre moyen situé dans la plage allant de 10 à 25 µm.

12. Formulation selon l'une quelconque des revendications 8 à 11, **caractérisée par** une masse volumique moyenne située dans la plage allant de 2,18 à 4,74 g/cm3, par exemple comprise entre 2,8 et 3,1 g/cm³.

13. Formulation selon l'une quelconque des revendications 8 à 12, dans laquelle le métal ou l'alliage métallique comprend ou consiste en l'acier AISI 316 L.

14. Formulation selon l'une quelconque des revendications 8 à 13 :
- comprenant en outre des charges, en plus desdites particules métalliques solides, mélangées dans ladite formulation, lesdites charges étant de type organique et/ou inorganique et étant choisies dans le groupe constitué par la silice, le charbon, les particules ou fibres de renforcement, les particules ou fibres de carbone, MoS₂, l'inosilicate de calcium éventuellement de nature minérale, le dioxyde de titane, l'alumine, le sulfate de baryum, le graphite, les pigments colorants, le polyimide, les polyesters cycliques, la polyéther-éthercétone, le poly(sulfure de paraphénylène), la polypropylène-sulfone ou leurs mélanges ; et/ou
- dans laquelle le polymère fluoré et les particules métalliques solides sont mélangés à sec.

15. Revêtement ou matériau façonné comprenant une formulation selon l'une quelconque des revendications 8 à 14, **caractérisé en ce que** ledit revêtement ou matériau façonné constitue au moins une partie d'un palier de friction, d'un patin de friction ou garniture de friction, d'un segment pour un compresseur sec ou lubrifié, une douille sphérique, un support de pivot, un guide ou un joint, d'un élément de siège ou d'étanchéité d'une vanne, par exemple pour une machine industrielle et/ou une vanne.
